# FASCICULE DE BREVET EUROPEEN

(11) **EP 2 459 363 B1**
(45) Date de publication et mention de la délivrance du brevet: **05.03.2014**
(21) Numéro de dépôt: 10752029.8
(22) Date de dépôt: 16.07.2010
(51) Int. Cl.: B29C 70/54

(54) **PROCEDE DE FABRICATION D'UNE PIECE D'AERONEF PAR INFUSION DE RESINE**
VERFAHREN ZUR HERSTELLUNG EINES FLUGZEUGTEILS DURCH HARZEINSPRITZEN
PROCESS OF MANUFACTURING AN AIRCRAFT PART BY RESIN INJECTION

(30) Priorité: 28.07.2009 FR 0955290
(43) Date de publication de la demande: 06.06.2012
(73) Titulaire: Airbus Operations, 31000 Toulouse (FR); European Aeronautic Defence and Space Company EADS France, 75781 Paris Cedex 16 (FR)
(72) Inventeur: BLOT, Philippe, F-44000 Nantes (FR); HOCHART, Benoît, F-44100 Nantes (FR); BECHTEL, Stéphane, F-44120 Vertou (FR)
(74) Mandataire: Potdevin, Emmanuel Eric
(86) Numéro de dépôt international: PCT/FR2010/051498
(87) Numéro de publication internationale: WO 2011/015747

(56) Documents cités:
- EP-A1- 1 674 245
- DE-A1-102006 031 336
- DE-C1- 19 912 723
- FR-A1- 2 921 295
- US-A- 6 048 488
- US-A1- 2004 130 072
- US-A1- 2008 224 360

## Description

L'invention concerne la fabrication des pièces d'aéronef en matériau composite et en particulier les procédés mettant en oeuvre une infusion de résine.

On connait un mode de fabrication de pièces d'aéronef en matériau composite qui requiert une étape d'infusion, sous l'effet du vide, d'une résine à travers une préforme comprenant des fibres. Plus précisément, on effectue d'abord une distribution surfacique de la résine sous toute la préforme textile à l'aide d'un média qui présente une grande perméabilité à la résine par comparaison avec la préforme. Puis on procède à l'infusion de la résine à travers la préforme suivant une direction perpendiculaire aux plis, c'est-à-dire aux couches de renfort constituant la préforme. On arrête l'infusion soit quand le débit de résine à l'entrée du moule s'annule, soit lorsque la quantité théorique de résine à injecter a été atteinte, cette quantité étant mesurée par son poids. Il s'agit ci-dessus d'un procédé utilisant une membrane semi-étanche. Avec une telle membrane, la résine reste confinée dans le moule sous la membrane. En l'absence d'une telle membrane, la fin de l'opération d'injection est détectée par la sortie de la résine à travers les évents servant à générer le vide dans le moule.

La quantité de résine injectée au cours de la mise en oeuvre du procédé influence la santé de la pièce. En effet, si la quantité injectée est insuffisante, la pièce risque de présenter une ou plusieurs zones sèches. Elle influence aussi l'épaisseur de la pièce si l'infusion est effectuée sous sac à vide: C'est alors le taux volumique de fibres dans la pièce qui en pâtit et par conséquent les propriétés mécaniques de cette dernière.

Or, lors de la réalisation d'une pièce en matériau composite par infusion de résine dans une préforme textile placée sous une membrane semi-étanche, il est difficile de détecter la fin du remplissage de la préforme par la résine pour différentes raisons.

Tout d'abord, il est malaisé de détecter que le débit est nul car la mesure par pesée de la cuve d'injection n'est pas suffisamment précise. En effet, la présence de tuyaux entre la cuve et le moule perturbe la mesure. De plus, il est difficile de mesurer précisément de grands volumes de résine. Enfin il peut se produire des fuites dans le circuit de résine, dans le moule et dans les matériaux situés dans son environnement.

De plus, il est difficile de calculer la quantité de résine à injecter dans la préforme car le volume de cette dernière est lui-même difficile à déterminer. Pareillement, on ne maîtrise pas le volume intérieur des tuyaux d'alimentation en résine car leur longueur est déterminée par l'opérateur en fonction du montage et de l'encombrement du moyen chauffant qui est utilisé pour polymériser la résine après infusion. Enfin, il existe des incertitudes sur les caractéristiques physiques de la résine (coefficient de dilatation, masse volumique, compressibilité).

Par ailleurs, lors des infusions sous sac à vide, c'est-à-dire hors d'un moule fermé, on constate que le débit de résine s'annule d'abord de façon provisoire. En effet, lorsque la quantité théorique de résine a été injectée, le débit a tendance à s'annuler, ce qui réduit les pertes de charge entre le pot d'injection et le haut de la préforme. La perte de charge est en effet proportionnelle au carré du débit. La réduction de perte de charge a pour conséquence de réduire la différence de pression entre le pot d'injection et la zone supérieure de la préforme. Or si la pression dans le pot d'injection est égale à la pression atmosphérique (ce qui est généralement vrai pour les injections sous sac à vide), la pression dans la préforme et donc sous le sac à vide devient proche de la pression atmosphérique. Il s'ensuit une diminution de la pression de compactage (qui est égale à la différence de pression entre la pression sous le sac à vide et la pression sur ce dernier égale à la pression atmosphérique). Il en résulte un accroissement de l'épaisseur de la préforme textile et donc un appel supplémentaire de résine qui se traduit par une augmentation temporaire du débit avant qu'il s'annule à nouveau.

Le document US 6048488 - A décrit un procédé de fabrication d'un élément composite comprenant l'étape de disposer dans un empilement comprenant une préforme, au moins une couche d'un matériau présentant une perméabilité à une résine prédéterminée inférieure à celle d'une partie de la préforme la plus proche de la couche.

Le document US 2004/0130072 - A décrit un procédé de fabrication d'un élément composite, dans lequel procédé est utilisé un capteur de présence de résine dans une couche de fibres à imprégner.

Le document EP 1 555 104-A décrit un procédé de fabrication d'un élément composite utilisant RTM (Resin Transfer Moulding), dans lequel procédé on utilise un comparateur pour mesurer l'épaisseur du substrat des fibres de renforcement.

Un but de l'invention est de mieux maîtriser la quantité de résine à injecter dans les différents types de procédé mettant en oeuvre une infusion de résine.

A cet effet, on prévoit selon l'invention un procédé de fabrication selon la revendication 1.

Ainsi, en injectant la résine dans la préforme à partir de son extrémité opposée à la couche ou aux couches relativement peu perméables, ces dernières ne sont imprégnées par la résine qu'après le remplissage de la préforme. En effet, compte tenu de leur position de l'autre côté de la préforme et de leur perméabilité, chaque couche de matériau supplémentaire se remplit de résine après seulement que la résine ait infusé à travers toute la préforme. La résine a donc tendance à finir l'imprégnation des dernières couches de la préforme avant d'imprégner ces couches supplémentaires. Lorsqu'on reçoit du capteur une information indiquant la présence de résine, on interrompt l'injection. En effet, à ce stade, la résine a rempli la préforme.

Avantageusement, on dispose le capteur sous une membrane semi-étanche de l'installation.

On prévoit également une pièce d'aéronef qui a été fabriquée au moyen d'un procédé selon l'invention et fait partie de l'un au moins des types suivants : une pièce de fuselage, une pièce de voilure, une pièce d'une surface stabilisatrice et une pièce de structure, de mat et/ou de nacelle.

On prévoit aussi un aéronef qui comprend au moins une pièce fabriquée au moyen d'un procédé selon l'invention.

On prévoit encore, selon l'invention, une installation selon la revendication 4. Des formes préférentielles de l'invention sont définies dans les revendications dépendantes.

Avantageusement, l'installation comprend plusieurs couches du matériau, le capteur étant disposé de préférence entre les deux couches ou entre deux des couches.

On améliore encore ainsi la fiabilité du procédé en vue que la préforme soit convenablement imprégnée avant que la résine ait atteint les couches supplémentaires.

Dans un mode de réalisation, la couche de matériau s'étend entre une membrane semi-étanche et une tôle de lissage de l'installation.

Avantageusement, la couche de matériau présente un taux volumique de fibres supérieur à celui de la partie de la préforme la plus proche de la couche et/ou un tissage plus serré qu'un tissage de la partie de la préforme la plus proche de la couche.

Il s'agit dans ces deux derniers cas de modes de réalisation qui permettent de donner aux couches de matériau la caractéristique de perméabilité précitée.

Avantageusement, la perméabilité est celle du matériau suivant une direction perpendiculaire à un plan tangent à la couche, le matériau de la couche présentant de préférence en outre une perméabilité à la résine inférieure à celle de la partie de la préforme suivant une direction parallèle à ce plan.

Ainsi, on assure que la résine a tendance à finir l'imprégnation des dernières couches de la préforme avant de se propager suivant la direction perpendiculaire dans la ou les couches supplémentaires. Lorsque c'est en outre dans la direction parallèle au plan général de la couche que la perméabilité du matériau est inférieure à celle de la préforme, on empêche la résine de se propager prématurément dans ces couches supplémentaires et d'aller imprégner de cette façon d'autres zones de la préforme, ce qui pourrait générer des zones sèches dans la pièce. Cette option est intéressante notamment lorsque la perte de charge dans la préforme suivant une direction parallèle au plan n'est pas constante, notamment lorsque l'épaisseur de la préforme et celle de la pièce à réaliser varient lorsqu'on suit cette direction.

De préférence, le capteur comprend un matériau présentant une capacité électrique lorsqu'il est au contact de la résine différente de sa capacité électrique lorsqu'il n'est pas au contact de la résine.

Il s'agit d'un mode de réalisation du capteur particulièrement simple à mettre en oeuvre.

Avantageusement, le capteur est apte à transmettre une information relative à un taux de réticulation de la résine.

Ainsi, on peut déterminer l'instant correspondant à la fin de la polymérisation et donc par exemple minimiser la présence de la pièce dans des moyens chauffants tels que étuves et autoclaves.

Avantageusement, le capteur est apte à transmettre une information relative à une viscosité de la résine.

On pourra prévoir que l'installation comprend plusieurs capteurs.

Ainsi, on peut détecter une éventuelle hétérogénéité de remplissage, près de la surface de la pièce par exemple.

D'autres caractéristiques et avantages de l'invention apparaîtront encore dans la description suivante d'un mode de réalisation donné à titre d'exemple non limitatif en référence aux dessins annexés sur lesquels :
- la figure 1 est une vue en perspective d'un aéronef selon l'invention ;
- les figures 2 à 5 sont des vues en coupe d'une installation selon l'invention illustrant le principe général d'un mode de mise en oeuvre du procédé au cours de quatre étapes successives ; et
- les figures 6 à 8 sont des vues analogues montrant trois exemples d'installation selon l'invention.

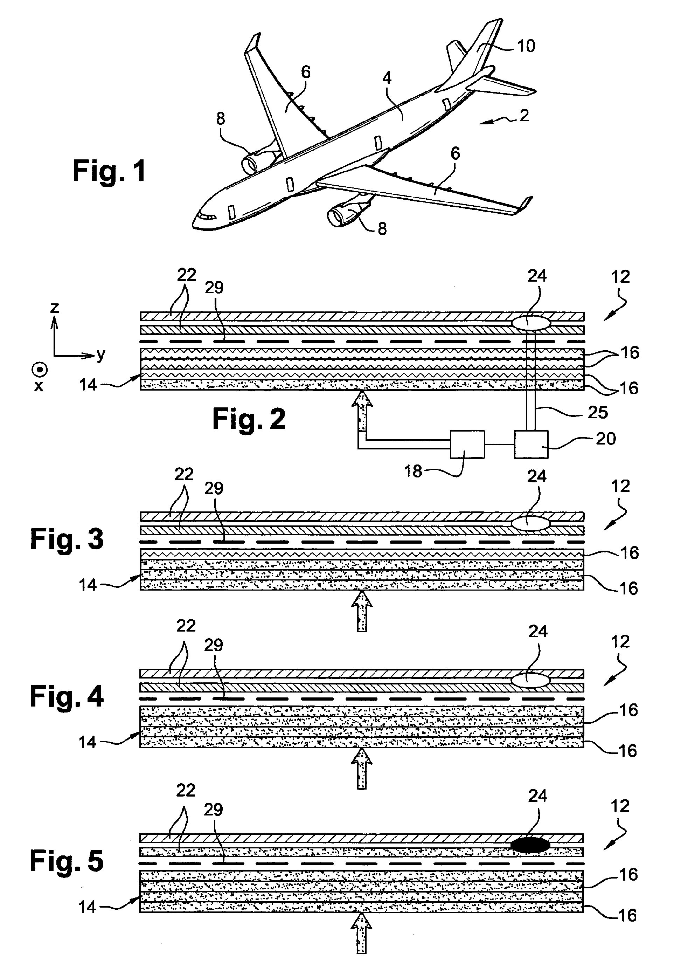

On a illustré à la figure 1 un aéronef 2 selon l'invention qui est ici un aérodyne et dans le présent exemple un avion. L'avion comprend un fuselage 4 et une voilure comprenant deux ailes 6 portant en l'espèce des moteurs respectifs 8. L'avion comprend également un empennage 10.

Nous allons présenter en référence aux figures 2 à 5 le déroulement d'un mode de mise en oeuvre du procédé selon l'invention dans son principe général. Il s'agit de fabriquer une ou plusieurs des pièces de l'avion 2 réalisées en matériau composite, à savoir ici en matière plastique renforcée par des fibres de verre.

En vue de mettre en oeuvre le procédé, l'installation 12 comprend une préforme 14 comprenant plusieurs couches ou plis 16 superposés, en l'espèce de forme plane ou généralement plans. Chacune de ces couches comprend des fibres. Il s'agit ici de fibres de carbone mais il pourrait s'agir d'un autre type de fibres, par exemple de fibres de verre. La préforme est ici formée de plusieurs couches d'un tissu de fibres empilées les unes sur les autres. Mais plus généralement les fibres peuvent être des fibres longues ou courtes formant un tissu ou des nappes cousues ou encore des nappes empilées. Il peut encore s'agir de mats de fibres ou de fibres coupées. Sur la figure 2, ce sont quatre couches 16 qui sont empilées pour former la préforme textile 14.

L'installation 12 comprend des moyens 18 pour injecter une résine destinée à infuser à travers l'empilement. Ces moyens comprennent notamment un réservoir de résine et des moyens de pilotage 20 des moyens d'injection.

Le procédé peut être mis en oeuvre au moyen de tout type de résine époxy. On utilise en l'espèce la résine référencée RTM6 chez la société Hexcel. On peut aussi utiliser d'autres types de résines injectables telles que des résines polyester, phénoliques, ou bismaléïmides.

L'installation comprend en outre une ou plusieurs couches supplémentaires 22 qui forment par exemple des plis. En l'espèce, deux couches 22 sont prévues. Ces couches sont ici disposées au-dessus de la préforme 14 et superposées aux couches 16 dans l'empilement. Il s'agit en l'espèce de plis d'un tissu de fibres de verre. Toutefois, il pourrait aussi s'agir d'un autre type de fibre, par exemple des fibres de carbone.

On utilise ci-après le repère X, Y, Z où les directions X et Y sont perpendiculaires entre elles et parallèles et tangentes aux plans des couches 16 et 22, et la direction Z est perpendiculaire à ces dernières.

Les couches supplémentaires 22 ont une perméabilité à la résine utilisée dans le procédé qui est inférieure à celle de couches de la préforme 14. En l'espèce, cette propriété vaut aussi bien lorsque ces perméabilités sont mesurées dans une direction quelconque du plan XY formant chaque couche 22 que dans la direction Z. De plus, si l'on peut prévoir que cette perméabilité est inférieure seulement à la perméabilité des couches supérieures de la préforme 14 ou de la couche la plus haute de cette dernière, en l'espèce elle est inférieure à la perméabilité de chaque couche de la préforme.

Afin d'obtenir cette propriété de perméabilité, on prévoit en l'espèce que chaque couche 22 présente un mode de tissage plus serré que celui des couches 14, à savoir une quantité de fibres par unité de surface plus élevée que dans chaque couche 14. On peut aussi prévoir, alternativement ou cumulativement, que le taux volumique de fibres est plus élevé dans les couches 22 que dans les couches 14.

L'installation 12 est prévue en l'espèce de sorte que l'injection de résine dans l'empilement ainsi constitué s'effectue à partir du bas, c'est-à-dire de la couche inférieure de la préforme.

L'installation 12 comprend en outre un capteur 24 de détection de présence de résine et son système d'acquisition et de mesure. Il s'agit par exemple d'un capteur diélectrique. Le capteur présente une capacité électrique différente suivant qu'il est ou non au contact de la résine.

Le capteur 24 comprend dans cet exemple un système d'électrodes interdigitées (il comprend des grilles entrelacées) dans lequel peut circuler un courant électrique qui génère un champ électrique en surface du capteur dont les caractéristiques électriques vont changer en fonction de la matière qui le touche. Ainsi, lorsqu'il n'est pas au contact de la résine, le capteur mesure la permittivité du vide, qui est très différente de celle d'un matériau semi-conducteur ou d'un matériau isolant tel que la résine. Le capteur permet entre autres de mesurer les caractéristiques diélectriques du matériau formant la résine et donc de suivre son évolution durant le temps de mise en oeuvre et notamment durant le temps de polymérisation de la pièce. Il permet donc un suivi du procédé. Ainsi, la présence de la résine, puis son taux de réticulation modifient l'impédance le capteur diélectrique. La comparaison des signaux (déphasage) fournis par le capteur permet par conséquent de détecter d'abord la présence de la résine puis son niveau de réticulation (ou son taux de polymérisation). Sachant que le capteur est traversé par un courant et interdigité, on l'isole électriquement et localement mais il faut qu'il puisse être au contact de la résine. C'est pourquoi on peut utiliser, comme en l'espèce, pour les couches supplémentaires 22 un matériau non conducteur de l'électricité tel que des fibres de verre, qui permet d'éviter un court circuit entre les électrodes. Le capteur 24 est disposé ici entre les deux couches supplémentaires 22. Le capteur est connecté électriquement de façon adaptée, notamment aux moyens 20 par un circuit 25.

Dans l'empilement, on interpose entre la préforme 14 et les couches 22 une couche 29 de tissu à délaminer afin de faciliter la séparation de la pièce à l'égard des couches 22 à l'issue du procédé.

Le procédé selon l'invention est mis en oeuvre de la façon suivante dans le présent mode.

On injecte la résine liquide dans l'empilement à partir de la couche inférieure de celui-ci. La figure 2 illustre cette couche 16 imprégnée de la résine qui a commencé à infuser dans l'empilement suivant le plan de la couche et suivant la direction Z.

Ensuite, la résine infuse dans la couche suivante 16, puis la suivante encore en se diffusant notamment suivant la direction Z. A la figure 3, on voit que les trois couches inférieures 16 sont maintenant imprégnées avec la résine tandis que la dernière couche supérieure 16 et les deux couches supplémentaires 22 n'ont pas encore reçu de résine.

L'infusion se produit ensuite dans la quatrième couche 16 si bien que, à la figure 4, c'est toute la préforme 14 qui est maintenant imprégnée de résine. Compte tenu des différences de perméabilité entre les couches 16 et 22, avant de venir infuser dans le premier pli supplémentaire 22, la résine finit d'imprégner complètement le pli supérieur 16 de la préforme.

Enfin, comme illustré à la figure 5, la préforme étant complètement imprégnée, la résine infuse dans la couche de tissu à délaminer 29 puis dans la couche supplémentaire 22 la plus basse, ce qui met le capteur 24 en contact avec la résine. Ce dernier transmet donc aux moyens 20 ou à l'opérateur une information indiquant que la résine a infusé à travers l'une des couches 22. Ces moyens interrompent alors l'injection de résine dans l'empilement.

Au cours de la suite du procédé, la résine réticule et son degré de réticulation est suivi en direct au moyen des informations transmises par le capteur. Lorsque ces informations indiquent que la polymérisation de la résine est achevée, on extrait la pièce de l'empilement.

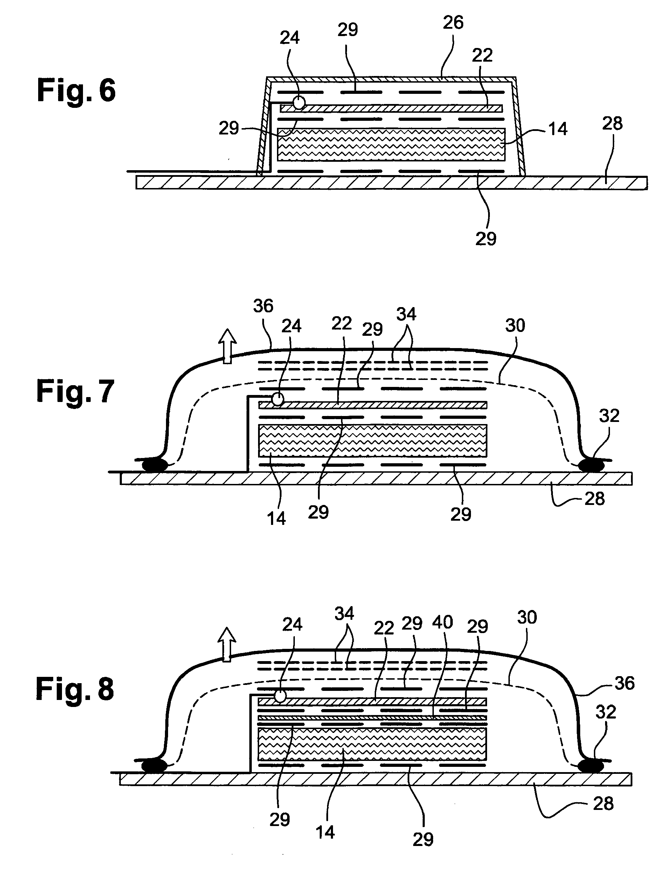

Un premier mode détaillé de réalisation de l'installation 12 a été illustré à la figure 6. Il s'agit d'une installation d'injection en moule fermé. L'installation présente en effet un moule supérieur 26 et un moule inférieur 28 tous deux recouverts intérieurement d'un agent démoulant. Le moule inférieur est ici plan tandis que le moule supérieur forme une cavité renfermant l'empilement. On retrouve, en effet, à l'intérieur du moule 26 la préforme 14 surmontée des couches supplémentaires 22 qui n'ont pas été ici distinguées entre elles sur le dessin. L'installation comprend en outre en l'espèce trois couches 29 de tissu à délaminer. La plus basse est interposée entre la préforme 14 et le moule inférieur 28. La plus haute est interposée entre les couches supplémentaires 22 et le moule supérieur 26. La dernière est interposée entre la préforme 14 et les couches supplémentaires 22. Les trois couches de tissu à délaminer 29 permettent à la fin du procédé de séparer facilement la pièce fabriquée, le moule et les couches 22. Le capteur 24 est de nouveau inséré entre ces dernières. On observera ici que le tissu à délaminer n'est pas nécessaire entre le moule inférieur 28 et la préforme 14 si un agent démoulant a été déposé au préalable.

Un deuxième mode de réalisation de l'installation est illustré à la figure 7, qui est muni d'une membrane semi-étanche 36. On retrouve l'ensemble de l'empilement présenté en référence à la figure 6 qui se trouvait interposé entre les moules 26 et 28. Seul le moule inférieur 28 est présent ici. Au-dessus de la couche 29 la plus haute de tissu à délaminer, est disposée une membrane semi-étanche 30 qui redescend sur les côtés de l'empilement pour être reliée au moule 28 au moyen d'un joint d'étanchéité 32. Au-dessus de cette membrane sont placées, dans l'empilement, des couches 34, ici au nombre de deux, d'un tissu de drainage. Enfin, l'ensemble est surmonté d'un sac à vide 36 qui redescend lui aussi jusqu'au joint d'étanchéité 32 en étant fixé à ce dernier.

L'invention présente un intérêt majeur lorsque le moule comprend une membrane semi-étanche. Elle permet, en effet, de disposer d'une information de fin d'injection en minimisant le risque de présence de zones sèches dans la pièce. Les plis supplémentaires 22 améliorent le drainage de la pression de vide dans la préforme en fin d'injection, ce qui ne peut qu'améliorer la qualité de l'imprégnation de la pièce fabriquée.

Contrairement à ce dernier mode de réalisation, le mode de réalisation de la figure 8, toujours pourvu d'un sac à vide, est cette fois muni d'une tôle de lissage 40 (en anglais *caul plate*). Ce mode de réalisation de l'installation se distingue du précédent uniquement par l'insertion de cette tôle 40 qui s'étend sous la couche intermédiaire 29 de tissu à délaminer, et par la présence d'une couche supplémentaire 29 de tissu à délaminer sous la tôle 40 et au-dessus de la préforme. Les couches supplémentaires 22 sont donc situées cette fois entre la tôle de lissage 40 et la membrane semi-étanche 30 dans la mesure où la tôle de lissage est située elle-même entre la préforme textile 14 et la membrane semi-étanche.

Le procédé de l'invention est mis en oeuvre comme illustré aux figures 2 à 5 au moyen de l'une ou l'autre de ces installations. En particulier, à chaque fois, on injecte la résine à partir de la zone inférieure de l'empilement de sorte que celle-ci imprègne tout d'abord la préforme textile et vient seulement ensuite imprégner les plis supplémentaires 22. Le capteur, une fois mis en contact avec la résine, envoie un signal indiquant que la préforme a été de ce fait convenablement imprégnée.

Le procédé et l'installation selon l'invention peuvent servir à réaliser des pièces pour l'avion de la figure 2. Il peut s'agir de panneaux de revêtements, de longerons ou de panneaux du fuselage 4. Il peut s'agir de pièces surfaciques ou de pièces de surface stabilisatrices telles que des volets ou des ailerons. Il peut s'agir de pièces de structure telles que des longerons, des mats ou des nacelles de moteur. La pièce peut être une pièce de voilure.

Bien entendu, on pourra apporter à l'invention de nombreuses modifications sans sortir du cadre de celle-ci.

La préforme et la pièce en résultant peuvent avoir une forme non plane.

Cette invention n'est pas limitée à la fabrication de pièces d'aéronefs. Elle est applicable à toute pièce (par exemple panneau, capot, coque,..) en matériau composite, en particulier pour des bateaux (coque et pont), voitures ferroviaires (trappe, cloison, caisse) et automobiles (capot..) réalisée par infusion de résine.

On pourra prévoir que l'injection a lieu non suivant une direction ascendante comme décrit en référence aux figures mais suivant une direction descendante, à partir du haut de l'empilement. Dans ce cas, les couches supplémentaires 22 se trouvent sous la préforme.

Sachant que le tissu à délaminer a généralement une perméabilité plus faible que les couches 16 de la préforme, on pourra utiliser la couche de tissu à délaminer en tant que couche supplémentaire séparant le capteur de la préforme. Par exemple, dans l'empilement de la figure 2, on pourra se dispenser des couches supplémentaires 22.

On pourra prévoir que la ou les couches supplémentaires 22, ou encore l'une d'entre elles, ont une étendue plus réduites que celles des autres couches de l'empilement et notamment que la préforme. La couche 22 pourrait ainsi être une couche locale ne s'étendant pas d'un bord à l'autre de l'empilement. On pourrait ainsi envisager que la couche 22 soit unique et formée par un simple mat de fibres de verre sur lequel est posé le capteur 24 afin d'être séparé de la préforme.

## Revendications

1. Procédé de fabrication d'une pièce d'aéronef (2), dans lequel:
- on dispose dans un empilement comprenant une préforme (14) au moins une couche (22, 29) d'un matériau présentant une perméabilité à une résine prédéterminée inférieure à celle d'une partie de la préforme la plus proche de la couche;
- on dispose d'un côté de la couche (22, 29) opposé à la préforme un capteur (24) de présence de la résine, et
- on injecte la résine dans l'empilement d'un côté de la préforme opposé à la couche.

2. Installation (12) pour la fabrication d'une pièce d'aéronef, qui comprend dans un empilement :
- une préforme (14) ; et
- au moins une couche (22, 29) d'un matériau présentant une perméabilité à une résine prédéterminée inférieure à celle d'une partie de la préforme la plus proche de la couche;
**caractérisé en ce qu'**elle comprend en outre -
- des moyens pour injecter la résine d'un côté de la préforme opposé à la couche; et
- un capteur (24) de présence de la résine disposé d'un côté de la couche (22, 29) opposé à la préforme.

3. Installation selon la revendication précédente, qui comprend plusieurs couches (22, 29) du matériau, le capteur (24) étant disposé de préférence entre les deux couches ou entre deux des couches.

4. Installation selon l'une quelconque des revendications 2 à 3 dans laquelle la couche de matériau (22, 29) présente un taux volumique de fibres supérieur à celui de la partie de la préforme (14) la plus proche de la couche.

5. Installation selon l'une quelconque des revendications 2 à 4 dans laquelle la couche de matériau (22, 29) présente un tissage plus serré qu'un tissage de la partie de la préforme (14) la plus proche de la couche.

6. Installation selon l'une quelconque des revendications 2 à 5 dans laquelle la perméabilité est celle du matériau suivant une direction (Z) perpendiculaire à un plan tangent à la couche (22, 29), le matériau de la couche présentant de préférence en outre une perméabilité à la résine inférieure à celle de la partie de la préforme suivant une direction (X, Y) parallèle à ce plan.

7. Installation selon l'une quelconque des revendications 2 à 6 dans laquelle le capteur (24) comprend un matériau présentant une capacité électrique lorsqu'il est au contact de la résine différente de sa capacité électrique lorsqu'il n'est pas au contact de la résine.

8. Installation selon l'une quelconque des revendications 2 à 7 dans laquelle le capteur est apte à transmettre une information relative à un taux de réticulation de la résine.

## Patentansprüche

1. Verfahren zur Herstellung eines Flugzeugteils (2), in dem:
- in einem Stapel, der einen Vorformling (14) umfasst, mindestens eine Schicht (22, 29) eines Materials angeordnet wird, das eine Durchlässigkeit für ein vorbestimmtes Harz aufweist, die geringer ist als die eines Teils des Vorformlings, welcher der Schicht am nächsten ist;
- auf einer Seite der Schicht (22, 29), die dem Vorformling gegenüberliegt, ein Sensor (24) zum Erkennen des Vorhandenseins des Harzes angeordnet wird, und
- das Harz in den Stapel auf einer Seite des Vorformlings, welche der Schicht gegenüberliegt, eingespritzt wird.

2. Anlage (12) zur Herstellung eines Flugzeugteils, die in einem Stapel Folgendes umfasst:
- einen Vorformling (14); und
- mindestens eine Schicht (22, 29) eines Materials, das eine Durchlässigkeit für ein vorbestimmtes Harz aufweist, die geringer ist als die eines Teils des Vorformlings, welcher der Schicht am nächsten ist;
**dadurch gekennzeichnet, dass** sie ferner Folgendes umfasst:
- Mittel zum Einspritzen des Harzes auf einer Seite des Vorformlings, welche der Schicht gegenüberliegt, und
- einen Sensor (24) zum Erkennen des Vorhandenseins des Harzes, der auf einer Seite der Schicht (22, 29), die dem Vorformling gegenüberliegt, angeordnet ist.

3. Anlage nach dem vorhergehenden Anspruch, die mehrere Schichten (22, 29) des Materials umfasst, wobei der Sensor (24) bevorzugt zwischen den zwei Schichten oder zwischen zwei der Schichten angeordnet ist.

4. Anlage nach einem der Ansprüche 2 bis 3, wobei die Materialschicht (22, 29) ein Volumenverhältnis an Fasern aufweist, das höher ist als das des Teils des Vorformlings (14), welcher der Schicht am nächsten ist.

5. Anlage nach einem der Ansprüche 2 bis 4, wobei die Materialschicht (22, 29) ein Geflecht aufweist, das kompakter ist als ein Geflecht des Teils des Vorformlings (14), welcher der Schicht am nächsten ist.

6. Anlage nach einem der Ansprüche 2 bis 5, wobei die Durchlässigkeit die des Materials in einer Richtung (Z) senkrecht zu einer Ebene ist, welche die Schicht (22, 29) tangiert, wobei das Material der Schicht bevorzugt ferner eine Durchlässigkeit für das Harz aufweist, die geringer ist als die des Teils des Vorformlings in einer Richtung (X, Y), die zu dieser Ebene parallel ist.

7. Anlage nach einem der Ansprüche 2 bis 6, wobei der Sensor (24) ein Material umfasst, das eine elektrische Kapazität aufweist, wenn es mit dem Harz in Kontakt ist, die von seiner elektrischen Kapazität, wenn es nicht mit dem Harz in Kontakt ist, verschieden ist.

8. Anlage nach einem der Ansprüche 2 bis 7, wobei der Sensor für die Übermittlung einer Information über einen Vernetzungsgrad des Harzes geeignet ist.

## Claims

1. A method of fabricating an aircraft part (2), which method comprises the following steps:
· placing in a stack comprising a preform (14) at least one layer (22, 29) of a material that presents permeability to a predetermined resin that is less than the permeability of a portion of the preform that is the closest to the layer;
· placing a resin presence sensor (24) on a side of the layer (22, 29) that is remote from the preform; and
· injecting the resin in the stack on a side of the preform that is remote from the layer.

2. An installation (12) for fabricating an aircraft part, having in a stack:
· a preform (14) ; and
· at least one layer (22, 29) of a material presenting permeability to a predetermined resin that is less than the permeability of a portion of the preform that is closest to the layer;
the installation being **characterized in that** it further comprises:
· means for injecting the resin on a side of the preform that is remote from the layer; and
· a sensor (24) for sensing the presence of the resin and arranged on a side of the layer (22, 29) that is remote from the preform.

3. An installation according to the preceding claim, having a plurality of layers (22, 29) of the material, the sensor (24) preferably being placed between the two layers or between two of the layers.

4. An installation according to any one of claims 2 to 3, wherein the layer of material (22, 29) presents a fiber volume fraction that is greater than the fiber volume fraction of the portion of the preform (14) that is closest to the layer.

5. An installation according to any one of claims 2 to 4, wherein the layer of material (22, 29) presents weaving that is tighter than weaving of the portion of the preform (14) that is closest to the layer.

6. An installation according to any one of claims 2 to 5, wherein the permeability is that of the material in a direction (Z) perpendicular to a plane tangential to the layer (22, 29), the material of the layer preferably also presenting permeability to the resin that is less than that of the portion of the preform in a direction (X, Y) parallel to said plane.

7. An installation according to any one of claims 2 to 6, wherein the sensor (24) includes a material presenting capacitance when it is in contact with the resin that is different from its capacitance when it is not in contact with the resin.

8. An installation according to any one of claims 2 to 7, wherein the sensor is suitable for transmitting information about a degree of curing of the resin.
